# EUROPÄISCHE PATENTANMELDUNG

(11) **EP 1 333 252 A2**
(43) Veröffentlichungstag der Anmeldung: **06.08.2003**
(21) Anmeldenummer: 03450017.3
(22) Anmeldetag: 17.01.2003
(51) Int. Cl.: G01F 1/28

(54) **Durchflussmengenmesser für Verteilerventil**

(30) Priorität: 01.02.2002 AT 1662002
(71) Anmelder: Janaczek, Raimund, 4800 Attnang Puchheim (AT)
(72) Erfinder: Janaczek, Raimund, 4800 Attnang Puchheim (AT)
(74) Vertreter: Patentanwälte BARGER, PISO & PARTNER

(57) **Zusammenfassung**

Durchflussmengenmesser für Verteilerventil, insbesondere für Warmwasser-Heizungsanlagen, der eine mit einer Sackbohrung (1) versehene Spindel (2) umfaßt, die einen nach oben aufragenden Rohrteil (3), einen mit einem Außengewinde (9) versehenen Gewindeteil (10) und einen unteren, außen einen Dichtungsring (12) tragenden Fixierteil (11) aufweist, in dessen unteres Ende ein eine axiale Bohrung aufweisendes Endstück (13) eingesetzt ist, wobei sich durch die Sackbohrung (1) der Spindel (2) und die Axialbohrung des Endstückes (13) ein Stellungsanzeigestift (4) erstreckt, der an seinem unteren Ende (6) ein Anströmglied (7) trägt, an seinem oberen Ende einen Federteller (17), zwischen welchem und einem am Rohrteil (3) vorgesehenen Anschlag (18) eine Feder (19) angeordnet ist, aufweist und in seinem mittleren Bereich mit einer ringförmigen, sich innen an der unteren Stirnseite (15) des Endstücks (13) abstützenden Verdickung (16) versehen ist, wobeider Stellungsanzeigestift (4) in einem unterhalb des Federtellers (17) gelegenen Bereich mit einem magnetisierbaren Material (8) versehen ist und der nach oben aufragende Rohrteil (3) der Spindel (4) zumindest über einen Abschnitt des unterhalb des Anschlages (18) für die Feder (19) gelegenen Bereiches außen von einer an einen Spannungsgeber anschließbaren Spule (20) umgeben ist, die ihrerseits mit einem Spannungsanzeiger (21) verbindbar ist.

## Beschreibung

Die Erfindung betrifft einen Durchflussmengenmesser für Verteilerventil, insbesondere für Warmwasser-Heizungsanlagen, mit einer eine Sackbohrung ausweisenden Spindel, in der ein in Längsrichtung bewegbarer, über das untere Ende der Spindel hinausragender Stellungsanzeigestift angeordnet ist, der an seinem herausragenden Ende ein Anströmglied trägt und an dem innerhalb der Spindel verbleibenden Abschnitt ein sich an einem in die Sackbohrung der Spindel gerichteten Vorsprung abstützendes Halteelement aufweist.

Die Erfindung betrifft insbesondere einen Durchflussmengenmesser für ein Verteilerventil, insbesondere für Warmwasser-Heizungsanlagen, der eine mit einer Sackbohrung versehene Spindel umfaßt, die einen nach oben aufragenden Rohrteil, einen mit einem Außengewinde versehenen Abschnitt und einen unteren, außen einen Dichtungsring tragenden Fixierteil aufweist, in dessen unteres Ende ein eine axiale Bohrung aufweisendes Endstück eingesetzt ist, wobei sich durch die Sackbohrung der Spindel und die Axialbohrung des Endstückes ein Stellungsanzeigestift erstreckt, der an seinem unteren Ende ein Anströmglied trägt, an seinem oberen Ende einen Federteller, zwischen welchem und einem am Rohrteil vorgesehenen Anschlag eine Feder angeordnet ist, aufweist und in seinem mittleren Bereich mit einer ringförmigen, sich innen an der unteren Stirnseite des Endstücks abstützenden Verdickung versehen ist.

Ein Durchflußmengenmesser dieser Art ist in der AT 406 793 B geoffenbart. Bei diesem Durchflußmengenmesser ist zumindest ein Teil der Spindel, insbesondere deren Griffteil aus einem durchsichtigen Kunststoff hergestellt, so daß dadurch auf optischem Wege die Position des Stellungsanzeigestiftes festgestellt werden kann, der von dem durch ein Abzweigrohr des Verteilerventils durchfließenden Heizwasser beaufschlagt wird. Durch Verdrehen der Spindel kann eine Einstellung des Strömungsdurchsatzes vorgenommen werden, wobei die Anordnung einer Skala auf dem Griffteil ein Ablesen der genauen Durchflußmenge ermöglicht.

Beim längeren Betrieb einer Warmwasser-Heizungsanlage tritt durch Verschmutzung allerdings immer eine erhebliche Verfärbung Heizungswassers auf, die eine genaue Ermittlung der Position des Stellungsanzeigestiftes auf optischem Wege sehr erschwert oder überhaupt unmöglich macht.

Aufgabe der Erfindung ist die Schaffung eines Durchflußmengenmessers, mittels welchem auch bei starker Verschmutzung des Heizungswassers eine genaue Ermittlung der Position des Stellungsanzeigestiftes und somit eine präzise Einstellung des Strömungsdurchsatzes gewährleistet ist.

Diese Aufgabe wird gemäß der Erfindung dadurch gelöst, daß der Stellungsanzeigestift an dem innerhalb der Spindel verbleibenden Abschnitt mit einem magnetisierbaren Material versehen ist und daß die Spindel außen zumindest über einen Teil ihrer Längserstreckung von einer an einen Spannungsgeber anschließbaren Spule umgeben ist, die ihrerseits mit einem Spannungsanzeiger verbindbar ist

Gemäß einer speziellen Ausführungsform der Erfindung ist der Stellungsanzeigestift in einem unterhalb des Federtellers gelegenen Bereich mit einem magnetisierbaren Material versehen und der nach oben aufragende Rohrteil der Spindel ist außen von einer an einen Spannungsgeber anschließbaren Spule umgeben, die ihrerseits mit einem Spannungsanzeiger verbindbar ist.

Diese erfindungsgemäße Ausbildung des Durchflußmengenmessers mit der Anordnung eines induktiven Elementes ermöglicht über den in Abhängigkeit von der Lage des Stellungsanzeigestifts sich ergebenden elektrischen Messwert am Spannungsanzeiger eine genaue Feststellung der Position des Stellungsanzeigestifts und damit des Strömungsdurchsatzes, wobei ein bestimmter Meßwert einer bestimmten Durchflußmenge zuzuordnen ist. Dazu ist es z.B. vorteilhaft den Spannungsanzeiger mit einer Skala von bestimmten Meßwertgrößen entsprechenden Durchflußmengen zu versehen.

Auf diese Weise ist es möglich, auch bei stark verschmutztem Heizungswasser eine genaue Ermittlung der Position des Stellungsanzeigestifts und damit der aktuellen Durchflußmenge vorzunehmen. Außerdem kann in vorteilhafter Weise die Spindel auch aus undurchsichtigem Material, vorzugsweise Kunststoff, hergestellt sein.

Gemäß einer Ausgestaltung der Erfindung ist das magnetisierbare Material eine Metalldrahtwicklung. Es kann erfindungsgemäß auch eine Metallhülse sein.

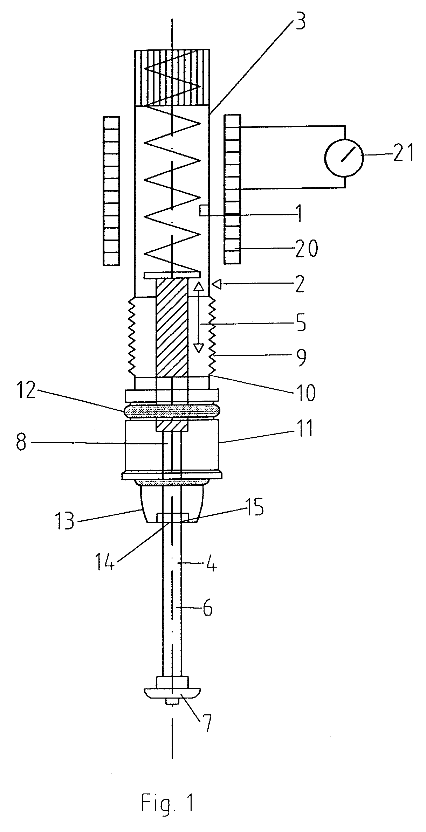

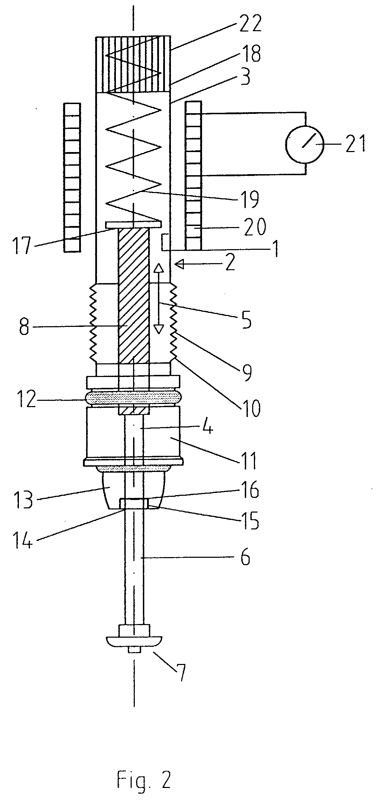

In der Zeichnung ist der Gegenstand der Erfindung näher erläutert, wobei Fig. 1 eine stark schematisierte Ausführungsform und Fig. 2 eine spezielle Ausführungsform des Durchflußmengenmessers gemäß der Erfindung zeigen.

Gemäß der Fig. 1 und 2 umfaßt der Durchflußmengenmesser eine mit einer Sackbohrung 1 versehene Spindel 2, die einen nach oben aufragenden Rohrteil 3 aufweist. Die Spindel 2 umfaßt einen Stellungsanzeigestift 4, der in ihrer Sackbohrung 1 in Längsrichtung 5 auf- und abbwegbar ist und über das untere Ende der Spindel 2 hinausragt. Das hinausragende Ende 6 des Stellungsanzeigestiftes 4 trägt ein Anströmglied 7. Der Stellungsanzeigestift 4 ist an seinem innerhalb der Spindel 2 verbleibenden Abschnitt mit einem magnetisierbaren Material 8 versehen, das diesen Abschitt des Stellungsanzeigestiftes 4 in Form einer Metalldrahtwicklung oder Metallhülse oder auch Metallfolie umgibt und an diesem befestigt ist.

Die Spindel 2 weist einen nach unten an den Rohrteil 3 anschließenden mit einem Außengewinde 9 versehenen Gewindeteil 10 und daran weiters einen nach unten anschließenden Fixierteil 11 auf, der außen einen Dichtungsring 12 trägt. In das untere Ende des Fixierteils 11 ist ein Endstück 13 eingesetzt, das mit einer mit der Längsachse der Sackbohrung 1 fluchtenden Längsbohrung versehen ist, die im Bereich des unteren Endes des Endstücks 13 in eine koaxiale Bohrung 14 kleineren Querschnitts übergeht.

Die Abwärtsbewegung des Stellungsanzeigestiftes 4 wird, wie in Fig. 1 gezeigt, dadurch begrenzt, daß sich die vorliegendenfalls ein Halteelement bildende Metallhülse aus magnetisierbarem Material 8 im Endstück 13 im die Bohrung 14 umgebenden, einen zur Längsmittelachse der Sackbohrung 1 der Spindel 2 hin gerichteten Vorsprung 15 bildenden Bereich abstützt . Gemäß der in Fig. 2 dargestellten Ausführungsform kann die Bewegung des Stellungsanzeigestiftes 4 beispielsweise auch durch eine am Stellungsanzeigestift 4 angeordnete, sich im Endstück 13 abstützende Verdickung 16, die damit ein Halteelement bildet, erfolgen. Die Bewegung des Stellungsanzeigestiftes 4 nach oben wird durch den Anschlag des Anströmgliedes 7 außen an der Unterseite des Enstückes 13 begrenzt.

Gemäß Fig. 2 ist am oberen Ende des Stellungsanzeigestiftes 4 ein Federteller 17 vorgesehen, zwischem welchem und einem im Rohrteil 3 vorgesehenen Anschlag 18 eine Feder 19 angeordnet ist. Unterhalb des Federtellers 17 ist vorliegendenfalls die aus magnetisierbarem Material 8 gebildete Metallhülse am Stellungsanzeigestift 4 befestigt. Selbstverständlich kann auch eine derartige Feder bei der in Fig. 1 gezeigten Ausführungsform vorgesehen werden.

Die Spindel 2 bzw. deren sich nach oben aufragender Rohrteil 3 ist außen zumindest über einen Teil ihrer/seiner Längserstreckung von einer an einen nicht gezeigten Spannungsgeber anschließbaren Spule 20 umgeben, die ihrerseits mit einem Spannungsanzeiger 21 verbindbar bzw entsprechend der Dartellungen gemäß Fig. 1 und 2 verbunden ist.

Die Spindel 2 ist mittels des an ihrem Gewindeteil 10 vorgesehenen Außengewindes 9 in ein entsprechendes Gewinde eines Verteilerventilgehäuses eingeschraubt, wobei die Spindel 2 je nach Drehrichtung nach oben oder unten bewegbar und entsprechend justierbar ist. Um die Verdrehung der Spindel 2 leicht bewerkstelligen zu können, ist der Bereich des oberen Endes des Rohrteils 3 der Spindel 2 außen beispielsweise mit einer Riffelung versehen und so als Griffteil ausgebildet. Anderseits kann wie in Fig. 2 dargestellt an das obere Ende des Rohrteils 3 ein eigener Griffteil 22 anschließen. Es kann aber beispielsweise die verschlossene Stirnseite des Rohrteils 3 oder des Griffteils 22 mit entsprechenden Vertiefungen, wie Schlitz, Loch oder dgl., für den Eingriff eines Werkzeuges versehen werden.

In den Fig. 1 und 2 ist der Stellungsanzeigestift 4 jeweils in seiner Ausgangsposition gezeigt, aus der der Stellungsanzeigestift 4 mittels des Anströmgliedes 7 in Abhängigkeit von der Durchflußmenge aus dieser Grundstellung ausgelenkt wird. Durch diese Auslenkung des Stellungsanzeigestiftes 4 erfolgt auch eine entsprechende Verschiebung der Lage des mit dem magetisierbaren Material 8 versehenen Abschnittes des Stellungsanzeigestiftes 4 innerhalb der an einen Spannungsgeber angeschlossenen Spule 20. Die Spule 20 ist mit einem Spannungsanzeiger 21 verbunden, von den jeweils ein der Position des Stellungsanzeigestiftes 4 entsprechender elektrischer Spannungsmeßwert ablesbar ist. Nachdem die Position des Stellungsanzeigestiftes 4 durchflußmengenabhängig ist, kann durch entsprechende Normung der ermittelten Meßwerte auf die Durchflußmenge damit auch eine exakte Angabe der jeweiligen Durchflußmenge festgestellt werden. Durch die Anordnung eines induktiven Elements kann der aktuelle Meßwert elektrisch umgesetzt bzw. angezeigt werden.

Auf diese Weise ist es möglich, trotz der bisher aufgetretenen Problematik bei stark verschmutztem Heizungswasser im Zusammenhang mit einer Ermittlung der Position des Stellungsanzeigestiftes 4 auf optischem Weg und damit Feststellung der Durchflußmenge, mit sehr einfachen Mitteln zu einer genauen Ermittlung der Durchflußmenge zu gelangen und auch eine ganz leicht kontrollierbare Justierung bzw. Nachjustierung der Spindel und damit Einstellung der Durchflußmenge vorzunehmen .

## Patentansprüche

1. Durchflussmengenmesser für Verteilerventil, insbesondere für Warmwasser-Heizungs-Anlagen, mit einer eine Sackbohrung (1) aufweisende Spindel (2), in der ein in Längsrichtung (5) bewegbarer, über das untere Ende der Spindel (2) hinausragender Stellungsanzeigestift (4) angeordnet ist, der an seinem herausragenden Ende (6) ein Anströmglied (7) trägt und an dem innerhalb der Spindel (2) verbleibenden Abschnitt ein sich an einem in die Sackbohrung (1) der Spindel (2) gerichteten Vorsprung abstützendes Halteelement aufweist, **dadurch gekennzeichnet, daß** der Stellungsanzeigestift (4) an dem innerhalb der Spindel (2) verbleibenden Abschnitt mit einem magnetisierbaren Material (8) versehen ist und daß die Spindel (2) außen zumindest über einen Teil ihrer Längserstreckung von einer an einen Spannungsgeber anschließbaren Spule (20) umgeben ist, die ihrerseits mit einem Spannungsanzeiger (21 verbindbar ist

2. Durchflussmengenmesser für Verteilerventil, insbesondere für Warmwasser-Heizungsanlagen, der eine mit einer Sackbohrung (1) versehene Spindel (2) umfaßt, die einen nach oben aufragenden Rohrteil (3), einen mit einem Außengewinde (9) versehenen Gewindeteil (10) und einen unteren, außen einen Dichtungsring (12) tragenden Fixierteil (11) aufweist, in dessen unteres Ende ein eine axiale Bohrung aufweisendes Endstück (13) eingesetzt ist, wobei sich durch die Sackbohrung (1) der Spindel (2) und die Axialbohrung des Endstückes (13) ein Stellungsanzeigestift (4) erstreckt, der an seinem unteren Ende (6) ein Anströmglied (7) trägt, an seinem oberen Ende einen Federteller (17), zwischen welchem und einem am Rohrteil (3) vorgesehenen Anschlag (18) eine Feder (19) angeordnet ist, aufweist und in seinem mittleren Bereich mit einer ringförmigen, sich innen an der unteren Stirnseite (15) des Endstücks (13) abstützenden Verdickung (16) versehen ist, **dadurch gekennzeichnet, daß** der Stellungsanzeigestift (4) in einem unterhalb des Federtellers (17) gelegenen Bereich mit einem magnetisierbaren Material (8) versehen ist und daß der nach oben aufragende Rohrteil (3) der Spindel (4) zumindest über einen Abschnitt des unterhalb des Anschlages (18) für die Feder (19) gelegenen Bereiches außen von einer an einen Spannungsgeber anschließbaren Spule (20) umgeben ist, die ihrerseits mit einem Spannungsanzeiger (21) verbindbar ist.

3. Durchflussmengenmesser nach Anspruch 1 oder 2, **dadurch gekennzeichnet, daß** das magnetisierbare Material (8) eine Metalldrahtwicklung ist.

4. Durchflussmengenmesser nach Anspruch 1 oder 2, **dadurch gekennzeichnet, daß** das magnetisierbare Material (8) eine Metallhülse ist.

5. Durchflussmengenmesser nach einem der Ansprüche 2 bis 4, **dadurch gekennzeichnet, daß** an den Rohrteil (3) oberhalb des Anschlages (18) für die Feder (19) ein Griffteil (22) anschließt.

6. Durchflussmengenmesser nach Anspruch 5, **dadurch gekennzeichnet, daß** der Anschlag (18) als ringförmige Schulter ausgebildet ist.

7. Durchflussmengenmesser nach einem der Ansprüche 2 bis 4, **dadurch gekennzeichnet, daß** der Anschlag (18) in bekannter Weise als geschlossene Stirnseite des Rohrteils (3)
ausgebildet ist.

8. Durchflussmengenmesser nach einem der Ansprüche 1, 3 oder 4, **dadurch gekennzeichnet, daß** das am Stellungsanzeigestift (4) angeordnete magnetisierbare Material (8) das sich an einem zur Längsmittelachse der Sackbohrung (1) der Spindel (2) hin gerichteten Vorsprung (15) abstützende Halteelement bildet.
